Europäisches Patentamt

European Patent Office

Office européen des brevets

(11) Veröffentlichungsnummer: **0 504 913 A1**

## EUROPÄISCHE PATENTANMELDUNG

(21) Anmeldenummer: **92104864.1**

(51) Int. Cl.5: **B60C 23/00**

(22) Anmeldetag: **20.03.92**

(30) Priorität: **22.03.91 DE 4109392**

(43) Veröffentlichungstag der Anmeldung:
**23.09.92 Patentblatt 92/39**

(84) Benannte Vertragsstaaten:
**AT BE DE FR GB IT LU NL**

(71) Anmelder: **Klöckner-Humboldt-Deutz Aktiengesellschaft**
**Deutz-Mülheimer-Strasse 111 Postfach 80 05 09**
**W-5000 Köln 80(DE)**

(72) Erfinder: **Gerhards, Alfred, Dipl.-Ing.**
**Zedernweg 5**
**W-5042 Erfstadt-Liblar(DE)**
Erfinder: **Knepper, Herbert, Dipl.-Ing.**
**Kentenichstrasse 15**
**W-5040 Brühl(DE)**

(54) **Reifendruckregelung.**

(57) Verfahren und Vorrichtung zur Druckregelung in Reifen für land- und bauwirtschaftliche Fahrzeuge.

Bekannte Druckregelungen gestatten die Aufrechterhaltung eines bestimmten Druckes in Abhängigkeit der Fahrzeuggeschwindigkeit beziehungsweise sind versehen mit einer zeitgesteuerten Druckregelung.

Zur Erreichung einer Druckregelung, die den Reifendruck an die Einsatzbedingungen optimiert unter Berücksichtigung der Fahrsicherheit, Zugkraft und Lebensdauer der Reifen sieht die erfindungsgemäße Regelung eine Steuerelektronik 5 vor, mit der über Meßwertgeber unterschiedliche Zustandsgrößen des Fahrzeugs erfaßt werden.

Die vorgestellte Reifendruckregelung berücksichtigt unterschiedliche Parameter, mit denen der Auslastungsgrad des Fahrzeugs beeinflußbar ist und paßt daran entsprechend den Reifendruck an.

EP 0 504 913 A1

Die Erfindungen betreffen Reifendruckregelungen für Fahrzeuge gemäß den Oberbegriffen der Ansprüche 1 und 2.

Derartige Reifendruckregelungen sind vornehmlich für Fahrzeuge wie Traktoren, Mähdrescher, Militärfahrzeuge sowie Geländefahrzeuge vorgesehen, bei denen entsprechend der Einsatzbedingungen der Reifendruck zur Steigerung der Zugkraft bzw. Erhöhung der Reifen-Lebensdauer sowie einer Verminderung des Bodendruckes dem Straßen- oder Geländeeinsatz angepaßt werden sollte.

Aus der DE-PS 11 08 100 sowie der DE-PS 12 28 526 sind Reifendruckregelungen bekannt, die während der Fahrt eine selbsttätige Regelung im Sinne der Aufrechterhaltung eines bestimmten Druckes in Abhängigkeit der Fahrzeuggeschwindigkeit und der Fahrzeugbelastung ermöglichen. Diese bekannten Einrichtungen sind nicht in der Lage, den Luftdruck willkürlich und vor allem während der Fahrt auf ein niedrigeres oder höheres Niveau zu verändern.

Der DE-PS 27 36 603 ist eine Reifendruckregelanlage entnehmbar, deren Aufbau eine elektronische Steuereinheit aufweist, mit der eine zeitgesteuerte Druckänderung im Reifen erreichbar ist. Das Auslösen einer Luftdruckänderung bewirkt gleichzeitig das Ansteuern eines Zeitgliedes, mit dem nach Ablauf einer Vorgabezeit eine Luftdruckanpassung endet. Eine solche zeitlich vorgegebene Regelung ist für viele Fahrzeugeinsätze unzureichend.

Der Erfindung liegen daher die Aufgaben zugrunde:
- eine wirksame Reifendruckregelung zu schaffen, die den Reifendruck optimal bei Beachtung des Nenndrucks an die Einsatzbedingungen des Fahrzeugs anpaßt unter Berücksichtigung der Gesichtspunkte Fahrsicherheit, Zugkraft, Bodendruck sowie Lebensdauer der Reifen,
- eine im Aufbau einfache, praxisgerechte Reifendruckregelung darzustellen.

Diese Aufgaben werden durch die unabhängigen Ansprüche 1 und 2 gelöst.

Die Berücksichtigung einsatzspezifischer Zustandsgrößen im Hinblick auf den Reifendruck ermöglicht, daß die Reifen abhängig vom jeweiligen Einsatz mit dem Nennluftdruck gefahren werden, der an den Auslastungsgrad des Fahrzeugs angepaßt ist. Als Parameter werden dabei insbesondere Fahrzeug- und/oder Bodenzustandsgrößen berücksichtigt. Neben der Berücksichtigung der Geschwindigkeit zählen dazu weiter die Achslast und Maßnahmen, durch die die Zugkraft beeinflußbar ist.

Eine vorteilhafte Druckregelung zur Durchführung des Verfahrens besteht aus einer Steuerelektronik, der die Signale von Meßwertgebern zugeführt werden und die durch einen Soll-Istwert-Vergleich, Vorgabewerte oder durch ein Steuersignal, das die Betätigung einer Kupplung signalisiert, eine Änderung des Reifendrucks vornimmt.

Vorteilhaft sind dabei zur Erfassung der Ist-Geschwindigkeit Meßwertgeber eingesetzt, deren Signal mit dem Sollwert-Geschwindigkeitssignal, z. B. Erfassung der eingelegten Geschwindigkeitsstufe in der Steuerelektronik verglichen werden und in Abhängigkeit davon der Reifen-Nennluftdruck der jeweiligen Geschwindigkeit angepaßt wird. Als Meßwertgeber zur Erfassung der unterschiedlichen Parameter, mit denen der Reifendruck veränderlich ist, sind vorteilhaft Sensoren einsetzbar.

Der abhängig von den Bodenbedingungen sich unterschiedlich auswirkende Schlupf der Antriebsräder, der die Traktion verringert, kann durch Einrichtungen verändert werden, die Einfluß auf die Zugkraft nehmen. Die Betätigung dieser Einrichtungen am Fahrzeug, mit denen der Schlupf verringert werden kann, wird der Steuerelektronik durch Signalgeber übertragen. Außerdem wird die Fahrzeugbelastung, die Achslast, erfaßt und als Steuersignal der Steuerelektronik zugeführt.

Diese Eingangssignale werden von der Steuerelektronik aufbereitet, in verwertbare Rechengrößen umgeformt und mit Soll- oder Vergleichswerten verglichen und in Abhängigkeit davon unter Einbeziehung installierter Sicherheitsfunktionen wird ein Schaltventil zur Beeinflussung des Reifendrucks angesteuert.

Die erfindungsgemäße Reifendruckregelung ist vorzugsweise für allradgetriebene Fahrzeuge einsetzbar.

Erfindungsgemäß ist vorgesehen, daß die Betätigung der Schaltkupplung für den Allradantrieb wie auch die Betätigung der Schaltkupplung für die Differentialsperre der Steuerelektronik übermittelt werden. Diese Einrichtungen stellen Maßnahmen dar, die allein oder gemeinsam zur Zugkrafterhöhung beitragen bzw. zur Vermeidung von Schlupf, und die insbesondere bei Gelände- bzw. Feldeinsatz von Traktoren betätigt werden, d. h. bei einer relativ niedrigen Geschwindigkeit.

Die Übermittlung dieses Fahrzustandes bzw. dieser Betriebsart signalisiert der Steuerelektronik, den Luftdruck in den Reifen so zu regeln, d. h. abzusenken, bis auf einen für die Reifen erlaubten, zulässigen Bereich, der eine Überbeanspruchung durch unzulässige Walkarbeit der Reifen vermeidet. Diese Maßnahme steigert vorteilhaft die Zugkraft und verringert den durch das Fahrzeuggewicht verursachten Bodendruck aufgrund einer vergrößerten Bodenaufstandsfläche der Reifen.

Eine weitere Ausgestaltung der Erfindung sieht Meßwertgeber vor, mit denen die Fahrzeug-Istgeschwindigkeit erfaßt und der Steuerelektronik zugeführt wird. Dabei ist die Reifendruckregelung mittels Vorgabewerten, die einem Geschwindigkeitsprofil entsprechen, in der Lage, den Reifendruck an den Nenndruck der Reifen, abhängig von der Fahrzeuggeschwindigkeit anzupassen. Vorteilhaft bietet es sich an, den Regelungsaufbau zu ergänzen durch einen Vergleich der tatsächlichen mit der theoretischen Geschwindigkeit zur Schlupf-Erfassung. Zur Bestimmung der Istgeschwindigkeit bietet sich dabei insbesondere die Verwendung von Radar-Sensoren an.

Zur Beeinflussung des Reifendrucks ist erfindungsgemäß auch die Erfassung der Achslast vorgesehen. Dazu eingesetzte Meßwertgeber bzw. Signalgeber sind vorzugsweise im Bereich des Fahrgestells oder der Achsaufhängung eingesetzt bzw. im Bereich des Reifenventils zur Übertragung eines Anstiegs des Druckluftniveaus als Folge einer Radlast-Zunahme unmittelbar an die Steuerelektronik.

Vorteilhaft ist die erfindungsgemäße Regelung weiter mit einer Zugkrafterfassung einer Regelhydraulik kombinierbar, wie sie üblicherweise für hydraulische Kraftheber an landwirtschaftlich eingesetzten Traktoren Anwendung findet, z. B. die elektronische Hubwerks-Regelung (EHR). Dabei kann die über Kraftmeßbolzen bestimmte Meßgröße "Zugkraft" der Steuerelektronik zur Reifendruckregelung zugeführt werden, zur Beeinflussung des Reifendrucks.

Die Erfindung ist auch ergänzbar durch ein Zeitglied zur zeitverzögerten Änderung des Luftdrucks in den Reifen, mit dem sichergestellt werden kann, das beispielsweise bei Straßenfahrt ein kurzzeitiges Einrücken der Differentialsperre keinen Einfluß auf den Reifendruck nimmt. Vorteilhaft ist das Zeitglied durch die Bedienungsperson veränderlich.

Aus Sicherheitsgründen sieht der Aufbau der Reifendruckregelung weiter vor, daß bei einer Betätigung der Betriebsbremse und eine damit verbundene Allradschaltung keinen Einfluß auf die Reifendruckregelung nimmt. Damit wird ein verändertes Fahrverhalten des Fahrzeugs während des Bremsvorgangs ausgeschlossen und eine optimale Bremsverzögerung erreicht.

Zur Vereinheitlichung des Reifendrucks aller Räder sind erfindungsgemäß Druckrichter vorgesehen, mit denen insbesondere der Reifendruck einer Achse übereinstimmend eingestellt werden kann.

Vorteilhaft ist die erfindungsgemäße Reifendruckregelung mit einer Tastatur versehen, die beispielsweise im Bereich des Fahrerstandes angeordnet ist, über die der Fahrer Fahrzeug- und/oder Reifenparameter eingeben bzw. verändern kann. Über die Tastatur ist die Betätigung der Regelung auslösbar, weiter besitzt der Fahrer damit eine Wahlmöglichkeit zwischen einer manuellen Reifendruckänderung oder einer automatischen Regelung.

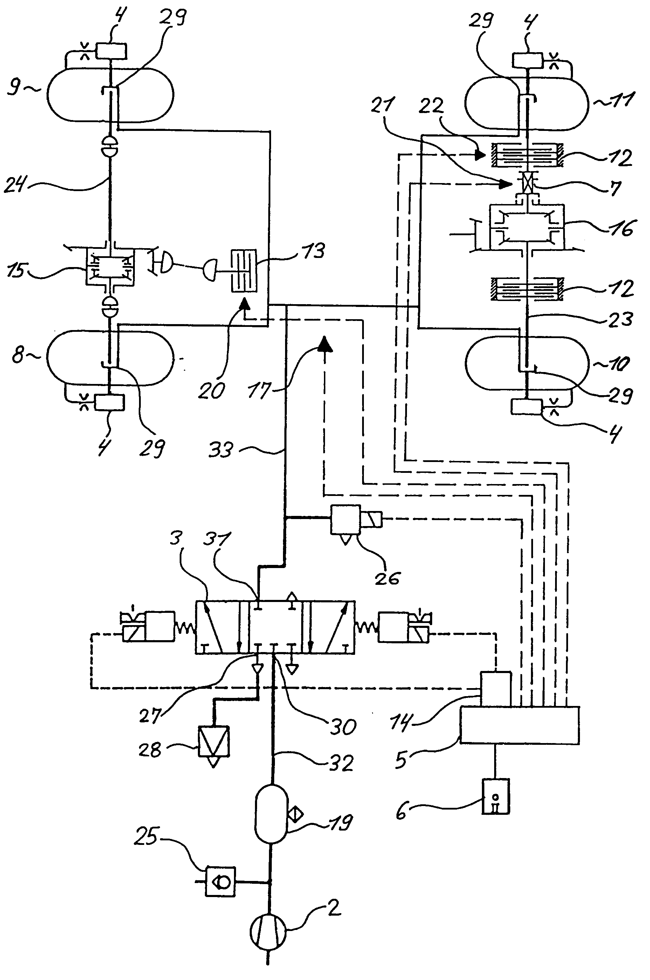

Ein Ausführungsbeispiel, das zur weiteren Erläuterung der Erfindung beiträgt, ist aus der Zeichnung sowie der dazu gehörigen Figurenbeschreibung entnehmbar.

Der Abbildung ist ein schematischer Aufbau der erfindungsgemäßen Reifendruckregelung entnehmbar.

Die Druckluftbeaufschlagung der Regelung erfolgt über den Behälter 19, dessen Befüllung mit Druckluft über eine Leitung von dem Luftpresser 2 der nicht dargestellten Druckluftbremsanlage direkt erfolgt oder dessen Befüllung über eine mit einem Rückschlagventil 25 versehene Leitung aus der Bremsanlage des Fahrzeugs erfolgen kann. Durch eine Leitung 32 ist der Behälter 19 mit dem Einlaß 30 eines Doppelmagnetventils 3 verbunden, welches als 5/3-Wegeventil ausgebildet ist. Durch den Anschluß der Leitung 33 am Auslaß 31 ist eine Verbindung zwischem dem Doppelmagnetventil 3 und allen Reifen 8 bis 11 geschaffen, wobei die zu jedem Reifen führende Leitung 33 jeweils an einem Drehanschluß 29 der Reifen 8, 9, 10, 11 angeschlossen ist. Von einem dem Drehanschluß 29 nachgeschalteten Steuerventil 4 gelangt der Druckluftstrom jeweils über eine Verbindungsleitung in den Reifen. Das Doppelmagnetventil 3 weist darüber hinaus einen Anschluß für die Entlüftung 27 auf, der über eine Leitung mit dem Druckbegrenzungsventil 28 verbunden ist.

Der elektronische Steuerteil der Reifendruckregelung weist eine Steuerelektronik 5 auf, die mit verschiedenen am Fahrzeug beziehungsweise der Reifendruckregelung angebrachten Meßwert- bzw. Signalgebern in Verbindung steht und die in Abhängigkeit von Vorgabewerten beziehungsweise durch einen Soll-Istwert-Vergleich das Doppelmagnetventil 3 ansteuert. Der Abbildung sind im wesentlichen die Vorderachse 24 und die Hinterachse 23 sowie den unmittelbar mit den Achsen verbundenen Komponenten wie das Vorderachsdifferential 15 und das Hinterraddifferential 16, die Betriebsbremse 12 sowie die Anordnung von Signal- und Meßwertgebern eines nicht weiter dargestellten Fahrzeugs entnehmbar. Im Bereich der Schaltkupplung 13, mit der der Vorderachs- und damit Allradantrieb des Fahrzeugs erreichbar ist, ist der Signalgeber 20 angeordnet. Ein Signalgeber 21 erfaßt die Betätigung der Differentialsperre 7, die unmittelbar am Hinterachsdifferential 16 angeordnet ist. Durch den Signalgeber 22 wird der Steuerelektronik 5 ein Signal bei Betätigung der Betriebsbremse 12 zugeführt. Mit dem Meßwertgeber 17 wird die Fahrzeug-Istgeschwindigkeit erfaßt. Der momentan in der Leitung 33 herrschende Luftdruck wird von dem Druckmeßgeber 26 erfaßt und ebenfalls der Steuerelektronik 5 zugeführt, der weiter ein Zeitglied 14 zugeordnet ist, mit dem beispielsweise eine verzögerte beziehungsweise getaktete Ansteuerung des Doppelmagnetventils 3 möglich ist. Mittels einer Tastatur 6 ist die Möglichkeit geschaffen, daß die selbsttätige Regelung außer Kraft gesetzt werden kann beziehungsweise von der Bedienungsperson gezielt beeinflußbar ist. Außerdem dient die Tastatur 6 dazu, der Regelung Reifen- und/oder Fahrzeugparameter einzugeben.

Wirkungsweise der Reifendruckregelung:

Bei einem Einsatz eines mit der erfindungsgemäßen Reifendruckregelung ausgestatteten Fahrzeugs wird die momentane Ist-Geschwindigkeit vom Meßwertgeber 17 erfaßt und ein entsprechendes Signal der Steuerelektronik 5 übertragen, die beispielsweise bei Straßenfahrt den Luftdruck der Reifen 8, 9, 10, 11 auf einen vorgegebenen Nenndruck anhebt beziehungsweise absenkt durch ein Ansteuern des Doppelmagnetventils 3 in eine entsprechende Belüftungs- oder Entlüftungsstellung bis zur Erreichung des geforderten Nenndrucks, der vom Druckmeßgeber 26 ermittelt und der Steuerelektronik 5 zugeführt wird. Eine solche Anpassung des Reifendrucks kann dabei kontinuierlich abhängig von Geschwindigkeitsänderungen erfolgen. Beim Ackereinsatz des Schleppers ist darüber hinaus die Regelung in der Lage, den Luftdruck in den Reifen abhängig von Betätigungen, mit denen die Zugkraft des Schleppers beeinflussenden Einrichtungen zu verändern. Dazu zählt das Einrücken der Differentialsperre 7 oder der Schaltkupplung 13 für den Allradantrieb, die beispielsweise auch gemeinsam betätigbar sind. Die Steuerelektronik 5 kann dazu so ausgelegt sein, daß die Signale der Meßwertgeber 20 (Allradbetrieb) und 21 (Differentialsperre) den Reifendruck weiter absenken, als vom Geschwindigkeitssignal her erforderlich wäre. Die Regelung ist weiter so aufgebaut, daß bei Betätigung der Betriebsbremse 12 grundsätzlich die Schaltkupplung 13 für den Allradantrieb zugeschaltet ist und über den Signalgeber 22 die Steuerelektronik 5 ein Signal erhält, mit dem die Reifendruckregelung während des Bremsvorgangs außer Kraft gesetzt ist. Als weitere Ergänzung sieht die erfindungsgemäße Reifendruckregelung einen Meßwertgeber vor, mit dem die Achslast bestimmbar ist, die ebenfalls Einfluß auf den Reifendruck nehmen kann. Durch die Tastatur 6 ist die Möglichkeit geschaffen, die Reifendruckregelung außer Kraft zu setzen, z. B. zur Darstellung eines individuellen Reifendrucks, mit dem beispielsweise bei einem Feldeinsatz des Schleppers ein möglichst geringer Bodendruck realisierbar ist.

**Patentansprüche**

1. Verfahren zur Druckregelung in Reifen für land- und bauwirtschaftliche Fahrzeuge, insbesondere Traktoren, zur Anpassung des Luftdruckes im Reifen während der Fahrt in Abhängigkeit von Parametern, dadurch gekennzeichnet, daß die Reifendruckregelung einsatzspezifische Zustandsgrößen des Fahrzeugs erfaßt, die auf den Auslastungsgrad des Fahrzeugs hinweisen, wie: Achslast, Geschwindigkeit und Zugkraft und den Luftdruck unter Berücksichtigung dieser Parameter verändert.

2. Vorrichtung zur Durchführung des Verfahrens der Druckregelung nach Anspruch 1, deren Regelung im wesentlichen aus einem mit einer Druckluftquelle (2) verbundenen Schaltventil (3) und an den Reifen (8, 9, 10, 11) beaufschlagbaren mit Füllanschlüssen verbundenen Steuerventilen (4) besteht, und weiter eine Steuerelektronik (5) aufweist, dadurch gekennzeichnet, daß die Regelung mit unterschiedlichen Meßwert- und Signalgebern versehen ist, mit denen

   - die Fahrzeug-Istgeschwindigkeit erfaßbar und ein entsprechendes Signal in der Steuerelektronik 5 mit einem Sollwertsignal vergleichbar ist,
   - die Betätigung von Schaltkupplungen bestimmbar ist, mit denen die Traktion des Fahrzeugs verringert und/oder die Zingkraft gesteigert werden kann,
   - ein durch die Fahrzeugbelastung auftretendes höheres Druckluftniveau in den Reifen (8, 9, 10, 11, 12) erfaßt und ein Meßwertsignal der Steuerelektronik (5) zugeführt wird.

3. Vorrichtung nach Anspruch 2, dadurch gekennzeichnet, daß die Druckregelung für allradgetriebene Fahrzeuge einsetzbar ist.

4. Vorrichtung nach Anspruch 2, dadurch gekennzeichnet, daß ein Signalgeber (20) die Betätigung einer Schaltkupplung (13) für den Allradantrieb bestimmt.

5. Vorrichtung nach Anspruch 2, dadurch gekennzeichnet, daß ein Signalgeber (21) im Bereich einer Schaltkupplung angeordnet ist, mit der die Differentialsperre (7) zumindest einer Achse betätigbar ist.

6. Vorrichtung nach Anspruch 2, dadurch gekennzeichnet, daß zum Soll- Istvergleich der Fahrzeuggeschwindigkeit bekannte Mittel wie beispielsweise Radarsensoren Anwendung finden.

7. Vorrichtung nach Anspruch 2, dadurch gekennzeichnet, daß die Achslast als weiterer Parameter für die Reifendruckregelung dient, die mittels eines Meßwertgebers erfaßbar ist, der im Bereich des Fahrgestells oder der Achsaufhängung angeordnet ist.

8. Vorrichtung nach Anspruch 2, dadurch gekennzeichnet, daß ein Anstieg des Druckluftniveaus in den Reifen (8, 9, 10, 11) bedingt durch eine Zunahme der Achslast über Meßwertgeber (26) der Steuerelektronik (5) übermittelbar ist.

9. Vorrichtung nach Anspruch 2 für ein Fahrzeug, welches mit einem hydraulischen Kraftheber versehen ist, der eine Zugkrafterfassung aufweisende elektro-hydraulische Regelung (EHR) aufweist, dadurch gekennzeichnet, daß die Zugkrafterfassung ebenfalls zur Beeinflussung des Reifendrucks nutzbar ist.

10. Vorrichtung nach einem der vorhergehenden Ansprüche, dadurch gekennzeichnet, daß ein Zeitglied (14) eingesetzt ist zur zeitverzögerten Änderung des Luftdrucks in den Reifen (8, 9, 10, 11), und das Zeitglied (14) von der Bedienungsperson beeinflußbar ist.

11. Vorrichtung nach einem der vorhergehenden Ansprüche, dadurch gekennzeichnet, daß bei Betätigung einer Betriebsbremse (12) und der damit verbundenen Allradschaltung die Reifendruckregelung unberücksichtigt bleibt.

12. Vorrichtung nach nach einem der vorhergehenden Ansprüche, dadurch gekennzeichnet, daß die Regelung Druckrichter vorsieht, mit denen der Druck der Räder (8, 9, 10, 11), insbesondere der Druck einer Achse übereinstimmend selbstätig einstellbar ist.

13. Reifendruckregelung nach einem der vorhergehenden Ansprüche, dadurch gekennzeichnet, daß über eine Tastatur (6) Fahrzeug- und/oder Reifenparameter der Steuerelektronik (5) veränderbar sind und weiter eine Wahlmöglichkeit zwischen einer manuellen Reifendruckänderung oder einer automatischen Regelung besteht.

EP 0 504 913 A1

6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 720 787 (TELEDYNE) <br> * Spalte 6, Zeile 51 - Spalte 7, Zeile 21; Abbildungen * | 1,3,7,13 | B60C23/00 |
| Y | | 2,6,9,10 | |
| | --- | | |
| Y | DE-A-3 308 080 (BOSCH) <br> * Seite 12, Absatz 2 * <br> * Seite 4, Absatz 2; Abbildungen * | 2,6,9,10 | |
| | --- | | |
| P,Y | EP-A-0 440 083 (MICHELIN) <br> * Spalte 4, Zeile 39 - Spalte 5, Zeile 14; Abbildungen * | 9 | |
| | --- | | |
| X | WO-A-9 003 895 (BOSCH) <br> * Seite 4, Absatz 2 - Seite 6, Absatz 1; Abbildungen * | 1,7-8 | |
| | --- | | |
| X | SOVIET PATENTS ABSTRACTS <br> Section PQ, Week 8733, 26. August 1987 <br> Derwent Publications Ltd., London, GB; <br> Class Q11, AN 87-174368 <br> & SU-A-1 279 874 (MOSC HYDROMELIORAT) 27. Dezember 1983 <br> * Zusammenfassung * | 1 | RECHERCHIERTE SACHGEBIETE (Int. Cl.5) <br><br> B60C |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 01 JULI 1992 | HAGEMAN M. |